# EUROPÄISCHE PATENTSCHRIFT

(11) **EP 1 688 761 B1**
(45) Veröffentlichungstag und Bekanntmachung des Hinweises auf die Patenterteilung: **06.04.2011**
(21) Anmeldenummer: 06001918.9
(22) Anmeldetag: 31.01.2006
(51) Int. Cl.: G01S 17/02, G02B 26/10, G02B 23/10

(54) **Verfahren und Vorrichtung zum Entdecken von optischen Systemen in einem Geländebereich**
Method and apparatus for detecting optical systems in a territory
Procédé et dispositif destinés à la découverte de systèmes optiques dans une zone de terrain

(30) Priorität: 03.02.2005 DE 102005006726
(43) Veröffentlichungstag der Anmeldung: 09.08.2006
(73) Patentinhaber: Carl Zeiss Optronics GmbH, 73447 Oberkochen (DE)
(72) Erfinder: Kürbitz, Gunther, Dr., 89551 Königsbronn (DE)
(74) Vertreter: Witte, Weller & Partner

(56) Entgegenhaltungen:
- EP-A- 0 614 103
- WO-A-03/102626
- WO-A-2006/045271
- FR-A- 2 736 731
- US-A- 5 528 418
- US-A- 5 793 034

## Beschreibung

Die Erfindung betrifft ein Verfahren zum Entdecken von optischen Systemen in einem Geländebereich, bei dem der Geländebereich optisch abgetastet und die Position des optischen Systems aus einer mittels einer Laser-Anordnung durchgeführten Messung ermittelt und optisch dargestellt wird, wobei die Position des optischen Systems unmittelbar aus der mittels der Laser-Anordnung durchgeführten Messung durch Auswerten der Intensität eines von einer optischen Oberfläche des optischen Systems reflektierten Lichtstrahls der Laser-Anordnung ermittelt wird.

Die Erfindung betrifft ferner eine Vorrichtung zum Entdecken von optischen Systemen in einem Geländebereich, mit einer Laser-Anordnung, mit einem Steuergerät zum Ermitteln der Position des optischen Systems aus einer mittels der Laser-Anordnung durchgeführten Messung und mit einer Vorrichtung zum optischen Anzeigen der Position, wobei das Steuergerät die Position des optischen Systems unmittelbar aus der mittels der Laser-Anordnung durchgeführten Messung durch Auswerten der Intensität eines von einer optischen Oberfläche des optischen Systems reflektierten Lichtstrahls der Laser-Anordnung ermittelt.

Ein Verfahren und eine Vorrichtung der vorstehend genannten Art sind aus dem Dokument US-B1-6 603 134 bekannt.

Im Rahmen von militärischen Konflikten sind Streitkräfte, insbesondere bei der heutzutage zunehmenden nicht-konventionellen Kriegsführung, immer häufiger durch feindliche optische Systeme bedroht. Unter dem Begriff "optische Systeme" sind im Rahmen der vorliegenden Erfindung optisch ortbare Systeme, beispielsweise feindliche Such- oder Zielsysteme, vor allem aber auch Schützen, insbesondere Heckenschützen, zu verstehen. Es besteht ein Bedarf an Systemen, um derartige feindliche optische Systeme bzw. Schützen zu erkennen, zu orten und gegebenenfalls unter Beschuss nehmen zu können.

Bei einer in dem Dokument US-A-6 057 915 beschriebenen Vorrichtung wird in zwei Stufen gearbeitet. In einer ersten Stufe wird ein Geländebereich durch Verschwenken eines Spiegels abgescannt, und die empfangenen Lichtsignale werden einem IRempfindlichen, zweidimensionalen Array zugeführt. Das Array erkennt den Abschuss eines von einem Schützen abgefeuerten Geschosses aufgrund der Wärmeentwicklung des Geschosses und leitet in einem derartigen Falle die zweite Stufe ein. In der zweiten Stufe wird die Flugbahn des Geschosses mittels eines Laser-Radars über ein Verschwenken des Spiegels verfolgt und aus der Flugbahn wird der Abschussort des Geschosses und damit die Position des Schützen berechnet. Das erfasste Bild des Zielbereiches wird auf einem Bildschirm eines PC dargestellt.

Dieses bekannte System hat daher den Nachteil, dass der Schütze mindestens einen Schuss abgefeuert haben muss, ehe er lokalisiert werden kann. Ferner ist das Gerät sehr unhandlich und mit allen seinen Komponenten wohl nur stationär einsetzbar.

Andererseits sind Vorrichtungen kommerziell erhältlich, bei denen eine großflächige Ausleuchtung eines Zielgebietes mit Laserlicht und eine gleichzeitige Beobachtung des ausgeleuchteten Zielgebietes mittels einer CCD-Kamera stattfindet.

Diese Vorrichtungen gestatten zwar eine passive Beobachtung eines Geländebereiches und ermöglichen die Detektion des z.B. von einem Zielfernrohr eines Schützen reflektierten Laserlichts, es handelt sich dabei aber um Systeme mit hohem Gewicht von über 30 kg und hohem Energieverbrauch von über 200 W, so dass diese Systeme in der Praxis ebenfalls nur stationär und infolge des hohen Energieverbrauches nur kurzzeitig eingesetzt werden können, es sei denn, es wird mit entsprechend großen und schweren Energiequellen gearbeitet.

Aus dem Dokument WO-A-03/102626 ist eine Vorrichtung zum Erkennen optischer und optoelektronischer Objekte bekannt. Die Vorrichtung verwendet eine LaserLichtquelle mit in vertikaler Richtung eindimensional aufgeweitetem Lichtaustritt, die auf einen Zielbereich gerichtet ist. Eine vertikal übereinander angeordnete Reihe von Detektoren empfängt das vom Zielbereich reflektierte Licht. Ferner ist ein fernrohrartiges optisches Beobachtungssystem vorgesehen.

Auch dieses System hat den Nachteil, dass es sehr schwer und umständlich zu handhaben ist.

Aus der allgemeinen Messtechnik sind zum Vermessen von großen Räumen, Tunnels und dergleichen so genannte 2D- oder 3D-Scanner bekannt, bei denen ein Laserstrahl über einen periodisch verschwenkten oder einen rotierenden Spiegel in einer Ebene ausgestrahlt und das von der Umgebung reflektierte Licht über den selben Spiegel auf einen Detektor geleitet wird. Ein derartiger 3D-Scanner ist in dem Dokument DE-A1-44 12 044 beschrieben.

Das Dokument US-B1-4 112 300 beschreibt eine Vorrichtung zum elektronischen Ergreifen von Gegenmaßnahmen mittels Infrarotlicht. Die Vorrichtung besteht aus einem Hochleistungslaser für das Aussenden eines energiereichen Laserstrahls sowie drei Visiereinrichtungen, wobei alle vier genannten Komponenten auf ein Zielobjekt ausgerichtet werden können. Die erste Visiereinrichtung enthält eine Bildwandler- und Verstärkereinrichtung, die zum Erfassen von schwachem Dauerlicht dient. Die zweite Visiereinrichtung enthält eine integrierende, d.h. speichernde Bildverstärkereinrichtung, die in einem Schreibmodus kurze Lichtimpulse zu speichern und diese in einem anschließenden Lesemodus anzuzeigen vermag. Die dritte Visiereinrichtung ist ein übliches optisches Zielfernrohr zum Einsatz bei ausreichender Umgebungshelligkeit. Die Vorrichtung wird vor dem Einsatz in üblicher Weise durch Probeschüsse auf ein in bekanntem Abstand befindliches Objekt eingeschossen, wodurch alle drei Visiereinrichtungen relativ zu dem Hochleistungslaser parallel ausgerichtet werden. Im Kampfeinsatz wird dann bei der bekannten Vorrichtung ein Zielobjekt auf passive Weise erkannt, indem beispielsweise in der ersten Visiereinrichtung ein Dauerlicht oder in der zweiten Visiereinrichtung das gespeicherte Bild eines Lichtimpulses erkannt wird. Mittels in den Visiereinrichtungen enthaltenen Fadenkreuzen üblicher Bauart kann nun die Vorrichtung auf das Zielobjekt gerichte und der Hochleistungslaser betätigt werden, um das Zielobjekt zu stören oder zu zerstören.

Diese bekannte Vorrichtung hat damit ebenfalls den Nachteil, dass ein Zielobjekt erst dann erkannt werden kann, wenn es ein Lichtsignal aussendet oder wenn das Umgebungslicht so hell und das Zielobjekt so deutlich erkennbar ist, dass es auch mit einem normalen Zielfernrohr entdeckt werden kann.

Aus dem eingangs genannten Dokument US-B1-6 603 134 ist ein optisches Detektionssystem für militärische Anwendungen bekannt. Bei diesem System geht es darum, auf aktiv-optischem Wege die Anwesenheit eines feindlichen Objektes zu detektieren, um dieses anschließend unschädlich zu machen, insbesondere Infrarot-Messeinrichtungen des Feindes durch entsprechende starke Laserstrahlen einer Laserkanone zu zerstören oder zumindest arbeitsunfähig zu machen. Unter dem feindlichen Objekt ist dabei beispielsweise ein feindlicher Satellit zu verstehen, der das eigene Land aus dem Weltall ausspioniert, oder auch ein terrestrisches Objekt, beispielsweise ein Auge eines feindlichen Schützen. Bei der Vorrichtung wird vorausgesetzt, dass das feindliche Objekt als ein Retroreflektor wirkt. Die Vorrichtung sendet einen Lichtstrahl aus, der von dem Objekt retroreflektiert wird, wobei der reflektierte Lichtstrahl auf einen Detektor der Vorrichtung gerät. Die Vorrichtung wird zum Zwecke des Entdeckens von feindlichen Objekten mittels eines Scanners im Raum verschwenkt. Der vom Detektor erkannte retroreflektierte Lichtstrahl wird einem so genannten Verwendungssystern zugeführt. Dieses System löst die mit verschwenkte Laserkanone aus. Die Vorrichtung arbeitet dabei ohne Zwischenschaltung eines optischen Beobachtungsgerätes oder eines Schützen.

Die Vorrichtung hat damit den Nachteil, dass sie nur quasi-stationär betreibbar ist, weil die erforderlichen Servoantriebe für einen mobilen Einsatz nicht geeignet sind.

Aus dem Dokument US-A-5 793 034 ist ein optisches Zielentdeckungssystern bekannt, bei dem ein Geländebereich mittels eines optischen Spiegels abgetastet wird.

Aus dem Dokument EP-A1-0 614 103 ist ein optisches Infrarot-System bekannt, bei dem Schwingspiegel zur Bilderzeugung verwendet werden.

Aus dem Dokument US-A-5 528 418 ist ein Nachtsichtgerät bekannt, bei dem das Gerät als Vorsatz für ein Zielfernrohr ausgebildet ist.

Aus dem Dokument FR-A1-2 736 731 ist eine Vorrichtung zum Detektieren von optischen Objekten bekannt, die auf die Vorrichtung gerichtet sind. Die Vorrichtung tastet einen Geländebereich mittels einer Laseranordnung ab und stellt die Position des optischen Objektes optisch dar.

Aus dem nicht-vorveröffentlichten Dokument WO-A1-2006/045271 ist eine Vorrichtung zum Lokalisieren von Systemen zur optischen Gegenbeobachtung bekannt.

Der Erfindung liegt demgegenüber die Aufgabe zugrunde, ein Verfahren und eine Vorrichtung der eingangs genannten Art dahingehend weiterzubilden, dass die vorstehend genannten Nachteile vermieden werden. Insbesondere sollen ein Verfahren und eine Vorrichtung bereitgestellt werden, die es gestatten, mit einem kompakten und leichten Gerät ein optisches System, insbesondere einen Schützen, bereits vor der Schussabgabe orten zu können, wobei das Gerät die Position des optischen Systems bzw. des Schützen vorzugsweise mit einem herkömmlichen Fernrohr anzeigt.

Bei einem Verfahren der eingangs genannten Art wird diese Aufgabe erfindungsgemäß dadurch gelöst, dass der Geländebereich mittels eines beweglichen Spiegels abgetastet wird, dass die Position von vorne in ein Fernrohr eingespiegelt wird, indem ein weiterer Lichtstrahl mit einer Wellenlänge im sichtbaren Bereich auf den Spiegel gerichtet wird, und dass der von dem Spiegel reflektierte weitere Lichtstrahl in das Fernrohr eingespiegelt wird.

Bei einer Vorrichtung der eingangs genannten Art wird die Aufgabe erfindungsgemäß dadurch gelöst, dass die Laseranordnung einen beweglichen Spiegel enthält, dass die Vorrichtung zum optischen Anzeigen ein Fernrohr ist, dass Mittel zum Einspiegeln der Position des optischen Systems von vorne in das Fernrohr vorgesehen sind, dass die Mittel eine weitere Lichtquelle aufweisen, dass die weitere Lichtquelle einen weiteren Lichtstrahl mit einer Wellenlänge im sichtbaren Bereich auf den Spiegel richtet, und dass der von dem Spiegel reflektierte weitere Lichtstrahl in das Fernrohr eingespiegelt wird.

Die der Erfindung zugrunde liegende Aufgabe wird auf diese Weise vollkommen gelöst.

Das Einspiegeln des Messergebnisses in ein Fernrohr hat den Vorteil, dass das Messergebnis sogleich in einem herkömmlichen leichten und tragbaren Beobachtungsgerät, d.h. zusammen mit einem Bild des Geländebereiches, zur Verfügung steht. Die ermittelte Position des optischen Systems steht daher unmittelbar im Bild des Geländebereiches zur Verfügung. Unter einem "Fernrohr" sind dabei leichte optische Beobachtungsgeräte aller Art zu verstehen, also auch Periskope, Kameras und dergleichen.

Die Erfindung hat ferner den Vorteil, dass eine bildliche Darstellung der Position des optischen Systems im sichtbaren Bereich bereitgestellt wird, die in einfacher Weise in das Fernrohr eingespiegelt werden kann.

Hierbei ist besonders bevorzugt, wenn das Fernrohr ein Zielfernrohr ist.

Diese Maßnahme hat den Vorteil, dass das optische System, insbesondere ein detektierter Heckenschütze, nach Ermittlung seiner Position sogleich anvisiert und gegebenenfalls unter Beschuss genommen werden kann.

Bei einer bevorzugten weiteren Ausgestaltung des erfindungsgemäßen Verfahrens wird der Spiegel verschwenkt bzw. ist der Spiegel bei einer Ausgestaltung der erfindungsgemäßen Vorrichtung ein mittels eines Schwingantriebes um eine Schwingachse verschwenkbarer Schwingspiegel. Der Schwingantrieb ist bevorzugt als Torquemotor ausgebildet. Ferner ist bevorzugt, wenn der Spiegel mit einer Frequenz verschwenkt wird, die der Resonanzfrequenz des Systems von Schwingantrieb und Spiegel entspricht.

Diese Maßnahme hat den Vorteil, dass der für die vorliegenden Zwecke erforderliche, relativ kleine Elevationsbereich in einfacher Weise durchlaufen werden kann. Im Gegensatz dazu würde bei einem Rotieren des Spiegels jeweils eine Rotation um 360° stattfinden, obwohl hier nur ein Winkel von z.B. 6°-10° benötigt wird. Die Verwendung eines Torquemotors als Schwingantrieb hat den Vorteil, dass mit geringem Aufwand und unter Einsatz kommerziell erhältlicher Bauelemente eine schnelle und präzise gesteuerte Schwenkbewegung des Spiegels bewirkt werden kann. Das Einstellen der Schwenkfrequenz auf den Wert der Resonanzfrequenz des schwingenden Systems hat den Vorteil, dass die Schwenkbewegung des Spiegels mit dem geringstmöglichen Energieverbrauch realisiert werden kann. Das ist insbesondere bei tragbaren Geräten mit einer Stromversorgung aus Batterien von Bedeutung.

Besonders bevorzugt im Rahmen des erfindungsgemäßen Verfahrens ist, wenn der Spiegel mittels eines Schwingantriebes um eine Horizontalachse und die Laser-Anordnung zusammen mit dem Fernrohr manuell in einer Horizontalebene verschwenkt wird.

Diese Maßnahme hat den Vorteil, dass der abzutastende Geländebereich schnell und einfach überprüft werden kann, indem der Benutzer des Systems einen entsprechenden Horizontalschwenk ausführt.

Bevorzugt ist bei der erfindungsgemäßen Vorrichtung, wenn die Schwingachse des Spiegels in einer Gebrauchsstellung der Vorrichtung eine Horizontalachse ist.

Auch diese Maßnahme hat den Vorteil, einen Geländeabschnitt durch einen manuellen Schwenk von Hand abscannen zu können.

Bei einer bevorzugten Ausgestaltung der erfindungemäßen Vorrichtung ist die Laser-Anordnung in einer Erkennungseinrichtung enthalten und die Erkennungseinrichtung ist bei einer ersten Variante oben und in einer zweiten Variante vorne auf das Fernrohr aufsetzbar.

Diese Maßnahme hat den Vorteil, dass das System mit einem Handgriff auf das Fernrohr aufgesetzt, beispielsweise aufgesteckt werden kann.

Bei einer besonders bevorzugten Ausführungsform der erfindungsgemäßen Vorrichtung weist die Laser-Anordnung eine Lichtquelle auf, deren Lichtstrahl mittels eines ersten Umlenkspiegels entlang einer optischen Achse auf den Spiegel und von dort auf den Geländebereich gelenkt wird, und der von dem optischen System reflektierte Lichtstrahl wird über den Spiegel entlang der optischen Achse auf ein Photoelement gelenkt.

Diese Maßnahme hat den Vorteil, dass sowohl der ausgesandte wie auch der empfangene Lichtstrahl über den selben Spiegel geleitet werden und dass eine äußerst kompakte Bauform entsteht, die es in besonderem Maße ermöglicht, die Vorrichtung als Auf- bzw. Vorsatz für ein Fernrohr auszubilden.

Bevorzugt ist weiter, wenn die Lichtquelle eine Laserdiode ist. Dabei kann alternativ die Laserdiode einen Lichtstrahl einer Wellenlänge im nahen Infrarot-Bereich, vorzugsweise im Bereich von 1.450 bis 1.600 nm, insbesondere von 1.500 nm, oder einen Lichtstrahl einer Wellenlänge im Übergang vom sichtbaren zum unsichtbaren Bereich, vorzugsweise im Bereich von 750 bis 900 nm, insbesondere von 800 nm, aussenden. Im ersteren Falle wird bevorzugt eine InGaAs-Laserdiode, im letzteren Falle bevorzugt eine GaAs-Laserdiode eingesetzt.

Diese Maßnahme hat den Vorteil, dass je nach Einsatzfall ein "augensicherer" Spektralbereich gewählt werden kann.

Eine gute Wirkung wird dabei erzielt, wenn der Laserdiode eine Zylinderlinse nachgeordnet ist.

Diese Maßnahme hat den Vorteil, dass der üblicherweise elliptische Querschnitt des Lichtaustritts bei einer Laserdiode in einen kreisförmigen Querschnitt umgewandelt wird.

Bevorzugt ist weiter, wenn das Photoelement eine InGaAs-PIN-Diode (Wellenlänge 1.450 bis 1.600 nm) bzw. eine Si-Diode (Wellenlänge 750 bis 900 nm) ist.

Bei einer weiteren bevorzugten Ausgestaltung der erfindungsgemäßen Vorrichtung ist dem Photoelement ein auf die Wellenlänge des von der Lichtquelle ausgesandten Lichtes abgestimmtes optisches Filter vorgeordnet.

Diese Maßnahme hat den Vorteil, dass durch die Reduzierung des Einflusses von Fremdlicht das Signal-/Rauschverhältnis verbessert wird.

Bei Ausführungsformen der erfindungsgemäßen Vorrichtung ist der Spiegel in einem konvergenten Abschnitt des Strahlenganges des von der Lichtquelle ausgesandten Lichtstrahls angeordnet.

Diese Maßnahme hat den Vorteil, dass ein kompakter Aufbau entsteht. Andererseits ist eine Anordnung in einem parallelen Abschnitt gleichfalls möglich.

Erfindungsgemäß wird ferner bevorzugt der weitere Lichtstrahl auf eine Seite des Spiegels gerichtet, die gegenüber der Seite liegt, auf die der reflektierte Lichtstrahl auftrifft.

Diese Maßnahme hat den Vorteil, dass eine besonders einfache Realisierung für das Bereitstellen der Darstellung der Position, z.B. des Schützen, erzielt und dabei eine wirksame Entkopplung des Messkreises und des Darstellungskreises erzielt wird.

Bevorzugt wird dabei der Spiegel um eine Schwingachse verschwenkt.

Ferner wird der weitere Lichtstrahl bevorzugt von vorne durch eine Objektivlinse des Fernrohres in das Fernrohr eingespiegelt.

Dabei haben die Laser-Anordnung und die Mittel in bevorzugter Weise die selbe Brennweite.

Diese Maßnahme hat den Vorteil, dass der Abbildungsmaßstab der selbe ist. Bei korrekter Justierung des Systems stellt dies ein 1:1-System dar. Ziele werden damit unabhängig von der relativen Justierung zwischen dem Meßsystem und dem Fernrohr immer am richtigen Ort dargestellt.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: eine schematisierte Seitenansicht einer Handfeuerwaffe mit einem Ziel- fernrohr, das mit einem Ausführungsbeispiel einer erfindungsgemäßen Vorrichtung versehen ist;
- Figur 2:: in vergrößertem Maßstabe, schematisch und in Seitenansicht ein erstes Ausführungsbeispiel einer erfindungsgemäßen Vorrichtung; und
- Figur 3:: eine Darstellung ähnlich Figur 2, jedoch in weiteren Details und für ein leicht abgewandeltes, zweites Ausführungsbeispiel einer erfindungs- gemäßen Vorrichtung

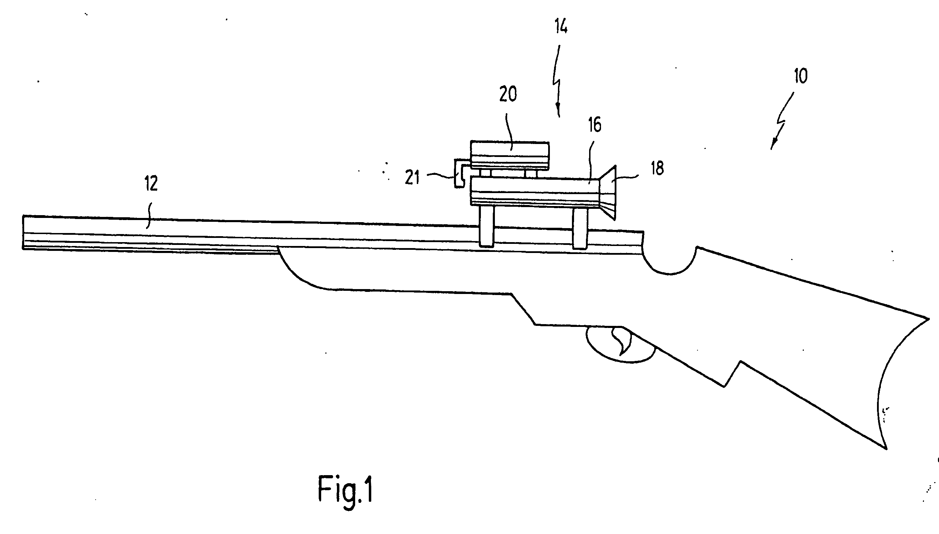

In Figur 1 bezeichnet 10 eine Handfeuerwaffe, im dargestellten Falle ein Gewehr. Es versteht sich, dass die Erfindung nicht nur bei dieser Art Waffen einsetzbar ist sondern auch bei anderen Waffen, beispielsweise bei mobilen Abschussvorrichtungen für langsam fliegende Geschosse, wie etwa Granatwerfer.

Auf einem Lauf 12 der Handfeuerwaffe 10 ist eine mit 14 bezeichnete Visiereinrichtung angeordnet. Die Visiereinrichtung 14 besteht aus einem Zielfernrohr 16 mit einer Augenmuschel 18. Oben auf das Zielfernrohr 16 ist eine Erkennungseinrichtung 20 aufgesetzt, beispielsweise aufgesteckt. Die Erkennungseinrichtung 20 weist eine Einspiegelungsvorrichtung 21 auf, mit der Lichtsignale vorne in das Zielfernrohr 16 eingespiegelt werden können.

Die Erkennungseinrichtung 20 dient zum Entdecken von optischen Systemen in einem Gelände. Unter einem "optischen System" sind im Rahmen der vorliegenden Anmeldung optisch ortbare Systeme, beispielsweise feindliche Such- oder Zielsysteme, vor allem aber auch Schützen, insbesondere Heckenschützen, zu verstehen.

Wenn im Rahmen eines militärischen Einsatzes ein Benutzer der Handfeuerwaffe 10 sich einem Gelände nähert, in dem feindliche Heckenschützen vermutet werden, so steckt er zunächst die Erkennungseinrichtung 20 auf das Zielfernrohr 16 auf. Dann betrachtet er das fragliche Gelände durch das Zielfernrohr 16 hindurch, indem er die Handfeuerwaffe 10 mit dem Zielfernrohr 16 langsam seitlich über das Gelände hinweg verschwenkt. Die Erkennungseinrichtung 20 überprüft das Gelände und blendet die Position eines Heckenschützen in das Bild des Zielfernrohres 16 ein, sobald ein solcher Heckenschütze entdeckt und lokalisiert wurde.

Es versteht sich, dass die Erkennungseinrichtung 20 nicht nur zusammen mit einem Zielfernrohr 16 sondern auch in Verbindung mit anderen optischen Beobachtungsgeräten verwendet werden kann, also z.B. mit Fernrohren, Periskopen, Kameras und dgl. Wenn daher im Rahmen der vorliegenden Erfindung von "Fernrohren" die Rede ist, so sind darunter auch derartige optische Beobachtungsgeräte zu verstehen.

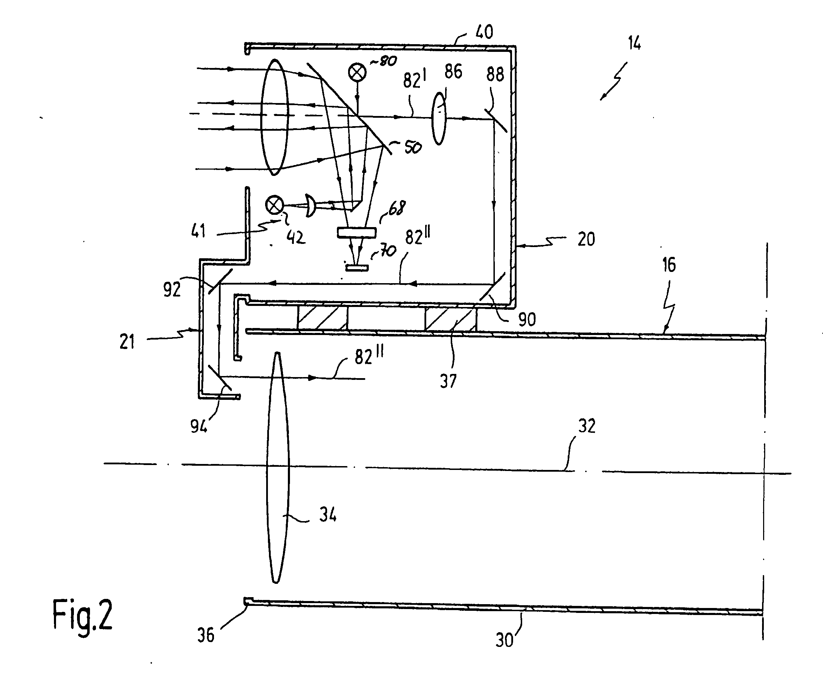

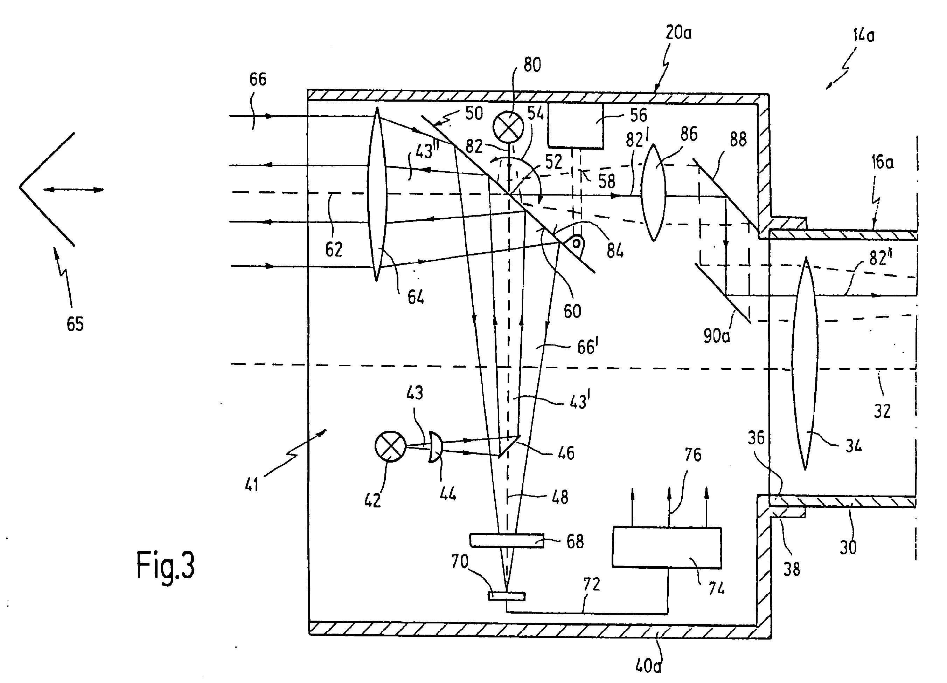

Die Figuren 2 und 3 zeigen Einzelheiten der Erkennungseinrichtung 20. Der Unterschied zwischen den in den Figuren 2 und 3 dargestellten beiden Ausführungsbeispielen besteht lediglich darin, dass beim Ausführungsbeispiel gemäß Figur 2 die Erkennungseinrichtung 20 - so wie in Figur 1 gezeigt - oben auf das Zielfernrohr 16 aufgesetzt ist, während beim Ausführungsbeispiel der Figur 3 die Erkennungseinrichtung 20a vorne auf das Zielfernrohr 16a aufgesetzt ist. Aus diesem Grunde sind in den Figuren 2 und 3 gleiche Bezugszeichen für gleiche Elemente verwendet, bei modifizierten Elementen ist in Figur 3 ein "a" hinzugefügt. Die Darstellung der Einzelheiten ist in Figur 3 detaillierter, sodass im folgenden auf beide Figuren Bezug genommen wird, soweit nichts anderes angegeben ist.

Das Zielfernrohr 16 läuft vorne in einen Tubus 30 aus und hat eine erste optische Achse 32. Der Tubus 30 umschließt an seinem vorderen Ende 36 eine Objektivlinse 34 des Zielfernrohres 16.

In Figur 2 sind im Bereich des vorderen Endes 36 an dessen Oberseite Befestigungselemente 37 zum Aufsetzen bzw. Aufstecken eines Tubus 40 der Erkennungseinrichtung 20 zu erkennen.

In Figur 3 ist bei dem dort dargestellten Ausführungsbeispiel ein Stutzen 38 des Tubus 40a der Erkennungseinrichtung 20a auf das vordere Ende 36 aufgesetzt bzw. aufgeschoben.

Die Erkennungseinrichtung 20 bzw. 20a kann daher in einfacher Weise oben bzw. vorne auf das Zielfernrohr 16 aufgesetzt werden.

Der Tubus 40 bzw. 40a der Erkennungseinrichtung 20 bzw. 20a umschließt eine Laser-Anordnung 41. Die Laser-Anordnung 41 weist eine Lichtquelle 42 auf. Die Lichtquelle 42 ist bevorzugt eine Laserdiode. Diese kann bei einer ersten Variante im "augensicheren" Spektralbereich arbeiten, z.B. bei einer Wellenlänge im Bereich von 1.450 bis 1.600 nm, vorzugsweise von etwa 1.500 nm, also im nahen IR-Bereich. Die Laserdiode ist dann bevorzugt eine InGaAs-Laserdiode. Alternativ kann auch im Übergang vom sichtbaren zum unsichtbaren Spektralbereich, also bei einer Wellenlänge im Bereich von 750 bis 900 n, vorzugsweise von etwa 800 nm gearbeitet werden. Dann wird bevorzugt eine GaAs-Laserdiode verwendet.

Die Lichtquelle 42 erzeugt einen Sendelichtstrahl 43, vorzugsweise in einer zur ersten optischen Achse 32 parallelen, also in normaler Gebrauchsstellung horizontaler Richtung. Da übliche Laserdioden einen ovalen Leuchtfleck haben, ist eine Zylinderlinse 44 nachgeschaltet, um den ovalen Leuchtfleck kreisförmig zu machen. Dieser kreisförmige Lichtstrahl trifft nun auf einen Umlenkspiegel 46, der ihn um bevorzugt etwa 90°, in Figur 2 und 3 also nach oben entlang einer zweiten optischen Achse 48, umlenkt.

Der umgelenkte Sendelichtstrahl 43' trifft dann auf einen Schwingspiegel 50. Der Schwingspiegel 50 ist im oberen Bereich des Tubus 40 angeordnet. Der Schwingspiegel 50 ist um eine zur Zeichenebene der Figur 2 senkrecht verlaufende, in der normalen Gebrauchsstellung also horizontale Schwingachse 52 verschwenkbar, wie mit einem Doppelpfeil 54 angedeutet. Zu diesem Zweck ist ein in Figur 3 äußerst schematisch angedeuteter Schwingantrieb 56 vorgesehen, der mit dem Schwingspiegel 50 über eine Wirkverbindung 58 verbunden ist. Der Schwingspiegel 50 wird mit einer Frequenz von z.B. 100 Hz periodisch um einen Winkel von z.B. 5°-20° verschwenkt.

Der Schwingantrieb 56 ist bevorzugt als Torquemotor ausgebildet. Der Schwingantrieb 56 wird ferner vorzugsweise bei einer Frequenz betrieben, die der Resonanzfrequenz des Systems von Schwingantrieb 56 und Schwingspiegel 50 entspricht. Die Resonanzeigenschaft dieses Systems kann durch Federn und dgl. noch optimiert werden.

Der Sendelichtstrahl 43' trifft in der Darstellung von Figur 2 und 3 von unten auf eine Vorderseite 60 des Schwingspiegels 50 und wird in eine dritte optische Achse 62 umgelenkt, die in der Mittelstellung des Schwingspiegels 50 vorzugsweise im wesentlichen parallel zur ersten optischen Achse 32 verläuft. Dabei durchläuft der erneut umgelenkte Sendelichtstrahl 43" eine Kollimator-Linse 64, so dass er als paralleler Lichtstrahl vorne aus der Erkennungseinrichtung 20 austritt.

Mit 65 ist in Figur 3 symbolisch als Tripelspiegel ein Heckenschütze angedeutet, der sich in einem Geländebereich befindet, auf den die Erkennungseinrichtung 20a gerichtet ist. Das reflektierende Element kann, allgemeiner gesprochen, ein optisches System mit einer (Zwischen-) Bildebene sein, in der eine plane optische Fläche angeordnet ist, die als Retroreflektor wirkt. Dies kann beispielsweise ein Zielfernrohr des Heckenschützen 65 sein, in dessen Zwischenbildebene ein Absehen auf einer planparallelen Glasplatte aufgebracht ist. Als reflektierendes Element kommt aber auch ein Auge des Heckenschützen 65 in Betracht.

Ein von dem Heckenschützen 65 reflektierter Empfangslichtstrahl 66 gelangt entlang der dritten optischen Achse 62 von vorne in die Erkennungseinrichtung 20. Der Empfangslichtstrahl 66 trifft dort auf die Vorderseite 60 des Schwingspiegels 50 und wird in umgekehrter Richtung entlang des Pfades des Sendelichtstrahls 43, d.h. entlang der zweiten optischen Achse 48 nach unten umgelenkt. Der umgelenkte Empfangslichtstrahl 66' durchläuft auf diesem Wege ein Interferenzfilter 68, das auf seine Wellenlänge abgestimmt ist. Er fällt dann schließlich auf ein Photoelement 70. Das Photoelement 70 ist bevorzugt eine InGaAs-PIN-Diode (Wellenlänge 1.450 bis 1.600 nm) bzw. eine Si-Diode (Wellenlänge 750 bis 900 nm).

Das Photoelement 70 ist über eine Leitung 72 mit einem Steuergerät 74 verbunden. Das Steuergerät 74 enthält insbesondere einen Komparator, dessen Schwellwert derart eingestellt ist, dass eine Unterscheidung zwischen "normalem" reflektierten Licht und dem intensiveren, vom Heckenschützen 65 reflektierten Licht möglich ist. Das Steuergerät 74 verfügt über mehrere Ausgänge, die es z.B. mit dem Schwingantrieb 56, insbesondere aber mit einer weiteren Lichtquelle 80 verbinden.

Die weitere Lichtquelle 80 ist bevorzugt ebenfalls eine Laserdiode, die jedoch zwingend im sichtbaren Spektralbereich, beispielsweise im grünen Bereich, also um 530 nm Wellenlänge, arbeitet. Die weitere Lichtquelle 80 wird vom Steuergerät 74 aktiviert, wenn von dem Photoelement 70 eine über dem Schwellwert liegender Empfangslichtstrahl 66 detektiert wurde. Dies geschieht so schnell, dass sich der Spiegel 50 in diesem Augenblick praktisch noch in der selben Winkelstellung befindet, in der dieser Schwellwert detektiert worden ist.

Die weitere Lichtquelle 80 sendet ihren sichtbaren Lichtstrahl 82 auf eine reflektierende Rückseite 84 des Spiegels 50. Der Lichtstrahl 82 wird daher in eine Richtung entlang der dritten optischen Achse 62 umgelenkt. Der umgelenkte Lichtstrahl 82' läuft dann durch ein Kollimator-Objektiv 86.

Beim Ausführungsbeispiel der Figur 2 wird der Lichtstrahl 82' dann vier mal mittels Umlenkspiegeln 88, 90, 92 und 94 jeweils um 90° umgelenkt. Er verläuft dann parallel zur dritten optischen Achse 62 und damit auch parallel zur ersten optischen Achse 32. Die Umlenkspiegel 92 und 94 befinden sich dabei in der Einspiegelvorrichtung 21, deren Ausgang (Umlenkspiegel 94) von vorne in das Zielfernrohr 16 und auf dessen Objektivlinse 34 gerichtet ist.

Beim Ausführungsbeispiel der Figur 3 hingegen wird der Lichtstrahl 82' nur zwei mal mittels Umlenkspiegeln 88 und 90a um jeweils 90° umgelenkt. Er verläuft dann ebenfalls parallel zur dritten optischen Achse 62 und damit auch parallel zur ersten optischen Achse 32.

Der Lichtstrahl 82" fällt in beiden Fällen von vorne in die Objektivlinse 34 des Zielfernrohres 16 ein. Dadurch erscheint die erfasste Position des Heckenschützen 65 als Bildpunkt im Bild des Zielfernrohres 16, so dass der Benutzer der Handfeuerwaffe 10 diese Waffe sogleich auf die erfasste Position richten und den Heckenschützen ggf. unter Beschuss nehmen kann.

Die Brennweiten der Sende-/Empfangsoptik einerseits und des Kollimator-Objektivs 86 andererseits sind dabei vorzugsweise gleich gewählt. Bei korrekter Justierung des Systems stellt dies dann ein sog. 1:1-System dar und stellt Ziele, unabhängig von der relativen Justierung zwischen der Erkennungseinrichtung 20 und dem Ziel- und Beobachtungssystem immer am richtigen Ort dar.

## Patentansprüche

1. Verfahren zum Entdecken von optischen Systemen (65) in einem Geländebereich, bei dem der Geländebereich optisch abgetastet und die Position des optischen Systems (65) aus einer mittels einer Laser-Anordnung (41) durchgeführten Messung ermittelt und optisch dargestellt wird, wobei die Position des optischen Systems (65) unmittelbar aus der mittels der Laser-Anordnung (41) durchgeführten Messung durch Auswerten der Intensität eines von einer optischen Oberfläche des optischen Systems (65) reflektierten Lichtstrahls (66) der Laser-Anordnung (41) ermittelt wird, **dadurch gekennzeichnet, dass** der Geländebereich mittels eines beweglichen Spiegels (50) abgetastet wird, dass die Position von vorne in ein Fernrohr (16) eingespiegelt wird, indem ein weiterer Lichtstrahl (82) mit einer Wellenlänge im sichtbaren Bereich auf den Spiegel (50) gerichtet wird und der von dem Spiegel (50) reflektierte weitere Lichtstrahl (82) in das Fernrohr (16) eingespiegelt wird, so dass eine bildliche Darstellung, der Position des optischen Systems (65) im sichtbaren Bereich bereitgestellt wird.

2. Verfahren nach Anspruch 1, **dadurch gekennzeichnet, dass** als Fernrohr ein Zielfernrohr (16) verwendet wird.

3. Verfahren nach Anspruch 1 oder 2, **dadurch gekennzeichnet, dass** der Spiegel (50) verschwenkt wird.

4. Verfahren nach Anspruch 3, **dadurch gekennzeichnet, dass** der Spiegel (50) mittels eines Schwingantriebes (56) um eine Schwingachse (52) und die Laser-Anordnung (41) zusammen mit dem Fernrohr manuell in einer Horizontalebene verschwenkt werden.

5. Verfahren nach Anspruch 4, **dadurch gekennzeichnet, dass** der Spiegel (50) mit einer Frequenz verschwenkt wird, die einer Resonanzfrequenz des Systems von Schwingantrieb (56) und Spiegel (50) entspricht.

6. Vorrichtung zum Entdecken von optischen Systemen (65) in einem Geländebereich, mit einer Laser-Anordnung (41), mit einem Steuergerät (74) zum Ermitteln der Position des optischen Systems (65) aus einer mittels der Laser-Anordnung (41) durchgeführten Messung und mit einer Vorrichtung zum optischen Anzeigen der Position, wobei das Steuergerät (74) die Position des optischen Systems (65) unmittelbar aus der mittels der Laser-Anordnung (41) durchgeführten Messung durch Auswerten der Intensität eines von einer optischen Oberfläche des optischen Systems (65) reflektierten Lichtstrahls (66) der Laser-Anordnung (41) ermittelt, **dadurch gekennzeichnet, dass** die Laseranordnung einen beweglichen Spiegel (50) enthält, dass die Vorrichtung zum optischen Anzeigen ein Fernrohr 16) ist, dass Mittel (80 - 94) zum Einspiegeln der Position des optischen Systems (65) von vorne in das Fernrohr (16) vorgesehen sind, dass die Mittel (80 - 94) eine weitere Lichtquelle (80) aufweisen, dass die weitere Lichtquelle (80) einen weiteren Lichtstrahl (82) mit einer Wellenlänge im sichtbaren Bereich auf den Spiegel (50) richtet, und dass der von dem Spiegel (50) reflektierte weitere Lichtstrahl (82) in das Fernrohr (16) eingespiegelt wird, so dass ein bildliche Darstellung der Position des optischen Systems (65) im sichtbaren Bereich bereitgestellt wird.

7. Vorrichtung nach Anspruch 6, **dadurch gekennzeichnet, dass** das Fernrohr ein Zielfernrohr (16) ist.

8. Vorrichtung nach Anspruch 6 oder 7, **dadurch gekennzeichnet, dass** die Laser-Anordnung (41) in einer Erkennungseinrichtung (20) enthalten ist, dass die Erkennungseinrichtung (20) oben auf das Fernrohr aufsetzbar ist, und dass die Mittel (80 - 94) eine Einspiegelvorrichtung (21) enthalten, die von vorne in das Fernrohr gerichtet ist.

9. Vorrichtung nach Anspruch 6 oder 7, **dadurch gekennzeichnet, dass** die Laser-Anordnung (41) in einer Erkennungseinrichtung (20a) enthalten ist, und dass die Erkennungseinrichtung (20a) vorne auf das Fernrohr aufsetzbar ist,

10. Vorrichtung nach einem oder mehreren der Ansprüche 6 bis 9, **dadurch gekennzeichnet, dass** der Spiegel (50) ein mittels eines Schwingantriebes (56) um eine Schwingachse (52) verschwenkbarer Schwingspiegel ist.

11. Vorrichtung nach Anspruch 10, **dadurch gekennzeichnet, dass** der Schwingantrieb (56) als Torquemotor ausgebildet ist.

12. Vorrichtung nach Anspruch 10 oder 11, **dadurch gekennzeichnet, dass** der Schwingantrieb (56) und der Schwingspiegel (50) ein schwingungsfähiges System bilden, und dass der Schwingantrieb (56) mit einer Resonanzfrequenz des schwingungsfähigen Systems betrieben wird.

13. Vorrichtung nach einem oder mehreren der Ansprüche 10 bis 12, **dadurch gekennzeichnet, dass** die Schwingachse (52) in einer Gebrauchsstellung der Vorrichtung eine Horizontalachse ist.

14. Vorrichtung nach einem oder mehreren der Ansprüche 6 bis 13, **dadurch gekennzeichnet, dass** die Laser-Anordnung (41) eine Lichtquelle (42) aufweist, deren Lichtstrahl (43) mittels eines ersten Umlenkspiegels (46) entlang einer optischen Achse (48) auf den Spiegel (50) und von dort auf den Geländebereich gelenkt wird, und dass der von dem optisches System (65) reflektierte Lichtstrahl (66) über den Spiegel (50) entlang der optischen Achse (48) auf ein Photoelement (70) gelenkt wird.

15. Vorrichtung nach Anspruch 14, **dadurch gekennzeichnet, dass** die Lichtquelle (42) eine Laserdiode ist.

16. Vorrichtung nach Anspruch 15, **dadurch gekennzeichnet, dass** die Laserdiode einen Lichtstrahl (43) einer Wellenlänge im nahen Infrarot-Bereich, vorzugsweise im Bereich von 1.450 bis 1.600 nm, vorzugsweise von 1.500 nm aussendet.

17. Vorrichtung nach Anspruch 16, **dadurch gekennzeichnet, dass** die Laserdiode eine InGaAs-Laserdiode ist.

18. Vorrichtung nach Ansprüch 15, **dadurch gekennzeichnet, dass** die Laserdiode einen Lichtstrahl (43) einer Wellenlänge im Übergang vom sichtbaren zum unsichtbaren Bereich, vorzugsweise im Bereich von 750 bis 900 nm, vorzugsweise von 800 nm aussendet.

19. Vorrichtung nach Anspruch 18, **dadurch gekennzeichnet, dass** die Laserdiode eine GaAs-Laserdiode ist.

20. Vorrichtung nach einem oder mehreren der Ansprüche 15 bis 19, **dadurch gekennzeichnet, dass** der Laserdiode eine Zylinderlinse (44) nachgeordnet ist.

21. Vorrichtung nach Anspruch 16 oder 17, **dadurch gekennzeichnet, dass** das Photoelement (70) eine InGaAs-PIN-Diode ist.

22. Vorrichtung nach Anspruch 18 oder 19, **dadurch gekennzeichnet, dass** das Photoelement (70) eine Si-Diode ist.

23. Vorrichtung nach einem oder mehreren der Ansprüche 14 bis 22, **dadurch gekennzeichnet, dass** dem Photoelement (70) ein auf die Wellenlänge des von der Lichtquelle (42) ausgesandten Lichtes abgestimmtes optisches Filter (68) vorgeordnet ist.

24. Vorrichtung nach einem oder mehreren der Ansprüche 14 bis 23, **dadurch gekennzeichnet, dass** der Spiegel (50) in einem konvergenten Abschnitt des Strahlenganges des von der Lichtquelle (42) ausgesandten Lichtstrahls (43) angeordnet ist.

25. Vorrichtung nach einem oder mehreren der Ansprüche 6 bis 24, **dadurch gekennzeichnet, dass** der weitere Lichtstrahl (82) auf eine Seite (84) des Spiegels (50) gerichtet wird, die gegenüber der Seite (60) liegt, auf die der reflektierte Lichtstrahl (66) auftrifft.

26. Vorrichtung nach einem oder mehreren der Ansprüche 6 bis 25, **dadurch gekennzeichnet, dass** der Spiegel (50) um eine Schwingachse (52) verschwenkt wird.

27. Vorrichtung nach einem oder mehreren der Ansprüche 6 bis 26, **dadurch gekennzeichnet, dass** der weitere Lichtstrahl (82) von vorne durch eine Objektivlinse des Fernrohres in das Fernrohr eingespiegelt wird.

28. Vorrichtung nach einem oder mehreren der Ansprüche 6 bis 27, **dadurch gekennzeichnet, dass** die Laser-Anordnung (41) und die Mittel (80-90) die selbe Brennweite haben.

## Claims

1. A method for detecting optical systems (65) within a terrain, wherein the terrain is optically scanned and the position of the optical system (65) is determined from a measurement by a laser unit (41) and is optically displayed, wherein the position of the optical system (65) is directly determined from the measurement made by the laser unit (41) by evaluating the intensity of a light beam (66) from the laser unit (41), after having been reflected by an optical surface of the optical system (65), **characterized in that** the terrain is scanned by means of a movable mirror (50), that the position is reflected into a telescope (16) from the front thereof by directing a further light beam (82) having a wavelength in the visible range onto the mirror (50) and reflecting the further light beam (82) reflected from the mirror (50) into the telescope (16), so that an image display of the position of the optical system (65) in the visible range is provided.

2. The method of claim 1, **characterized in that** an aiming telescope (16) is used as the telescope.

3. The method of claim 1 or 2, **characterized in that** the mirror (50) is swivelled.

4. The method of claim 3, **characterized in that** the mirror (50) is swivelled about an oscillation axis (52) by means of an oscillating drive (56), and that the laser unit (41) together with the telescope is manually swivelled within a horizontal plane.

5. The method of claim 4, **characterized in that** the mirror (50) is swivelled with a frequency corresponding to a resonance frequency of the system consisting of the oscillating drive (56) and the mirror (50).

6. An apparatus for detecting optical systems within a terrain, comprising a laser unit (41), a control unit (74) for determining the position of the optical system (65) from a measurement made by the laser unit (41), and a device for optically displaying the position, wherein the control unit (74) directly determines the position of the optical system (65) from the measurement made by the laser unit (41) by evaluating the intensity of a light beam (66) from the laser unit (41), after having been reflected by an optical surface of the optical system, **characterized in that** the laser unit includes a movable mirror (50), that the device for optically displaying is a telescope (16), that means (80-94) for reflecting the position of the optical system (65) into the telescope (16) from the front thereof are provided, that the means (80-94) comprise a further light source (80), that the further light source (80) directs a further light beam (82) having a wavelength in the visible range onto the mirror (50), and that the further light beam (52) reflected from the mirror (50) is reflected into the telescope (16), so that an image display of the position of the optical system (65) in the visible range is provided.

7. The apparatus of claim 6, **characterized in that** the telescope is an aiming telescope (16).

8. The apparatus of claim 6 or 7, **characterized in that** the laser unit (41) is comprised in a detection unit (20), that the detection unit (20) is adapted to be mounted to the top of the telescope, and that the means (80-94) include a reflecting device (21) which is directed into the telescope from the front thereof.

9. The apparatus of claim 6 or 7, **characterized in that** the laser unit (41) is comprised in a detection unit (20a), and that the detection unit (20a) is adapted to be mounted to the front of the telescope.

10. The apparatus of one or more of claims 6 through 9, **characterized in that** the mirror (50) is an oscillating mirror adapted to be swivelled about an oscillation axis (52) by means of an oscillating drive (56).

11. The apparatus of claim 10, **characterized in that** the oscillating drive (56) is configured as a torque motor.

12. The apparatus of claim 10 or 11, **characterized in that** the oscillating drive (56) and the oscillating mirror (50) constitute an oscillatory system, and that the oscillating drive (56) is operated at a resonance frequency of the oscillatory system.

13. The apparatus of one or more of claims 10 through 12, **characterized in that** the oscillation axis (52) is a horizontal axis in an operational position of the apparatus.

14. The apparatus of one or more of claims 6 through 13, **characterized in that** the laser unit (41) comprises a light source (42), the light beam (43) of which being directed along an optical axis (48) onto the mirror (50) by means of a first deviation mirror (46), and is directed therefrom onto the terrain, and that the light beam (66) reflected by the optical system (65) is directed via the mirror (50) along the optical axis (48) onto a photosensitive element (70):

15. The apparatus of claim 14, **characterized in that** the light source (42) is a laser diode.

16. The apparatus of claim 15, **characterized in that** the laser diode emits a light beam (43) at a wavelength in the near infrared range, preferably in the range of between 1,450 to 1,600 nm, preferably at about 1,500 nm.

17. The apparatus of claim 16, **characterized in that** the laser diode is an InGaAs laser diode.

18. The apparatus of claim 15, **characterized in that** the laser diode emits a light beam (43) at a wavelength in the transition from the visible to the invisible range, preferably in the range of between 750 to 900 nm, preferably at about 800 nm.

19. The apparatus of claim 18, **characterized in that** the laser diode is a GaAs laser diode.

20. The apparatus of one or more of claims 15 through 19, **characterized in that** a cylinder lens (44) is arranged downstream the light path of the laser diode.

21. The apparatus of claim 16 or 17, **characterized in that** the photosensitive element (70) is an InGaAs PIN diode.

22. The apparatus of claim 18 or 19, **characterized in that** the photosensitive element (70) is a Si diode.

23. The apparatus of one or more of claims 14 through 22, **characterized in that** an optical filter (68) is positioned upstream the optical path of the photosensitive element (70), the optical filter (68) being tuned to the wavelength of the light emitted by the light source (42).

24. The apparatus of one or more of claims 14 through 23, **characterized in that** the mirror (50) is arranged within a converging section of the light path of the light beam (43) emitted by the light source (42).

25. The apparatus of one or more of claims 6 through 24, **characterized in that** the further light beam (82) is directed to a side (84) of the mirror (50), the side (84) being opposite to the side (60) on which the reflected light beam (66) impinges.

26. The apparatus of one or more of claims 6 through 25, **characterized in that** the mirror (50) is swivelled about an oscillation axis (52).

27. The apparatus of one or more of claims 6 through 26, **characterized in that** the further light beam (82) is reflected into the telescope from the front thereof through an objective lens of the telescope.

28. The apparatus of one or more of claims 6 through 27, **characterized in that** the laser unit (41) and the means (80-90) have the same focal length.

## Revendications

1. Procédé servant à découvrir des systèmes optiques (65) dans une zone de terrain, dans le cadre duquel la zone de terrain est balayée de manière optique et la position du système optique (65) est déterminée à partir d'une mesure réalisée au moyen d'un dispositif laser (41) et est représentée de manière optique, moyennant quoi la position du système optique (65) est immédiatement déterminée à partir de la mesure réalisée à l'aide du dispositif laser (41) en évaluant l'intensité d'un rayon lumineux (66) du dispositif laser (41), réfléchi par une surface optique du système optique (65), **caractérisé en ce que** la zone de terrain est balayée au moyen d'un miroir mobile (50), **en ce que** la position est réfléchie par l'avant dans une lunette (16), tandis qu'un autre rayon lumineux (82) d'une longueur d'onde située dans la zone visible est dirigé sur le miroir (50) et que l'autre rayon lumineux (82) réfléchi par le miroir (50) est réfléchi dans la lunette (16) de telle sorte qu'une représentation en image de la position du système optique (65) est disponible dans la zone visible.

2. Procédé selon la revendication 1, **caractérisé en ce qu'**une lunette de visée (16) est utilisée comme longue-vue.

3. Procédé selon-la revendication 1 ou 2, **caractérisé en ce que** le miroir (50) pivote.

4. Procédé selon la revendication 3, **caractérisé en ce que** le miroir (50) pivote au moyen d'un mécanisme de rotation (56) autour d'un axe de rotation (52) et le dispositif laser (41) pivote manuellement sur un plan horizontal en même temps que la longue-vue.

5. Procédé selon la revendication 4, **caractérisé en ce que** le miroir (50) pivote à une fréquence correspondant à une fréquence de résonance du système composé d'un mécanisme de rotation (56) et d'un miroir (50).

6. Dispositif servant à découvrir des systèmes optiques (65) dans une zone de terrain, comportant un dispositif laser (41), un appareil de réglage (74) permettant de déterminer la position du système optique (65) à partir d'une mesure réalisée à l'aide d'un dispositif laser (41) et un dispositif d'affichage optique de la position, moyennant quoi l'appareil de réglage (74) détermine immédiatement la position du système optique (65) à partir de la mesure réalisée à l'aide du dispositif laser (41) en évaluant l'intensité d'un rayon lumineux (66) du dispositif laser (41), réfléchi par une surface optique du système optique (65) du dispositif laser (41), **caractérisé en ce que** le dispositif laser contient un miroir (50) mobile, **en ce que** le dispositif d'affichage optique est une longue-vue (16), **en ce que** des moyens (80 à 94) sont prévus pour la réflexion de la position du système optique (65) par l'avant dans la longue-vue (16), **en ce que** les moyens (80 à 94) présentent une autre source lumineuse (80), **en ce que** l'autre source lumineuse (80) dirige sur le miroir (50) un autre rayon lumineux (82) d'une longueur d'onde située dans la zone visible, et **en ce que** l'autre rayon lumineux (82) réfléchi par le miroir (50) est réfléchi dans la longue-vue (16) de telle sorte qu'une représentation en image de la position du système optique (65) est disponible dans la zone visible.

7. Dispositif selon la revendication 6, **caractérisé en ce que** la longue-vue est une lunette de visée (16).

8. Dispositif selon la revendication 6 ou 7, **caractérisé en ce que** le dispositif laser (41) est contenu dans un dispositif de détection (20), **en ce que** le dispositif de détection (20) peut être positionné dans la partie supérieure de la longue-vue, et **en ce que** les moyens (80 à 94) renferment un dispositif de réflexion (21) dirigé par l'avant dans la longue-vue.

9. Dispositif selon la revendication 6 ou 7, **caractérisé en ce que** le dispositif laser (41) est contenu dans un dispositif de détection (20a), et **en ce que** le dispositif de détection (20a) peut être positionné à l'avant de la longue-vue.

10. Dispositif selon l'une quelconque ou plusieurs des revendications 6 à 9, **caractérisé en ce que** le miroir (50) est un miroir rotatif pouvant pivoter autour d'un axe de rotation (52) au moyen d'un mécanisme de rotation (56) tournant.

11. Dispositif selon la revendication 10, **caractérisé en ce que** le mécanisme de rotation (56) est réalisé en tant qu'un moteur couple.

12. Dispositif selon la revendication 10 ou 11, **caractérisé en ce que** le mécanisme de rotation (56) et le miroir rotatif (50) forment un système rotatif, et **en ce que** le mécanisme de rotation (56) est entraîné à une fréquence de résonance du système rotatif.

13. Dispositif selon l'une quelconque ou plusieurs des revendications 10 à 12, **caractérisé en ce que** l'axe de rotation (52) est un axe horizontal dans une position d'utilisation du dispositif.

14. Dispositif selon l'une quelconque ou plusieurs des revendications 6 à 13, **caractérisé en ce que** le dispositif laser (41) présente une source lumineuse (42) dont le rayon lumineux (43) est dévié, au moyen d'un premier déflecteur (46) le long d'un axe optique (48), sur le miroir (50), puis de là sur la zone de terrain, et **en ce que** le rayon lumineux (66) réfléchi par le système optique (65) est dévié, par l'intermédiaire du miroir (50) le long d'un axe optique (48), sur une cellule photovoltaïque (70).

15. Dispositif selon la revendication 14, **caractérisé en ce que** la source lumineuse (42) est une diode laser.

16. Dispositif selon la revendication 15, **caractérisé en ce que** la diode laser émet un rayon lumineux (43) d'une longueur d'onde proche de l'infrarouge, de préférence comprise dans une plage allant de 1 450 à 1 600 nm, de préférence de 1 500 nm.

17. Dispositif selon la revendication 16, **caractérisé en ce que** la diode laser est une diode laser InGaAs.

18. Dispositif selon la revendication 15, **caractérisé en ce que** la diode laser émet un rayon lumineux (43) d'une longueur d'onde comprise entre la zone visible et la zone invisible, de préférence dans une plage allant de 750 à 900 nm, de préférence de 800 nm.

19. Dispositif selon la revendication 18, **caractérisé en ce que** la diode laser est une diode laser GaAs.

20. Dispositif selon l'une quelconque ou plusieurs des revendications 15 à 19, **caractérisé en ce qu'**une lentille cylindrique (44) est placée en aval de la diode laser.

21. Dispositif selon la revendication 16 ou 17, **caractérisé en ce que** la cellule photovoltaïque (70) est une diode InGaAs-PIN.

22. Dispositif selon la revendication 18 ou 19, **caractérisé en ce que** la cellule photovoltaïque (70) est une diode Si.

23. Dispositif selon l'une quelconque ou plusieurs des revendications 14 à 22, **caractérisé en ce qu'**un filtre optique (68) d'une longueur d'onde correspondant à la longueur d'onde de la lumière émise par la source lumineuse (42) est placé en amont de la cellule photovoltaïque (70).

24. Dispositif selon l'une quelconque ou plusieurs des revendications 14 à 23, **caractérisé en ce que** le miroir (50) est disposé dans un segment convergent de la trajectoire de rayon du rayon lumineux (43) émis par la source lumineuse (42).

25. Dispositif selon l'une quelconque ou plusieurs des revendications 6 à 24, **caractérisé en ce que** l'autre rayon lumineux (82) est dirigé sur une face (84) du miroir (50), opposée à la face (60) d'incidence du rayon lumineux (66) réfléchi.

26. Dispositif selon l'une quelconque ou plusieurs des revendications 6 à 25, **caractérisé en ce que** le miroir (50) pivote autour d'un axe de rotation (52).

27. Dispositif selon l'une quelconque ou plusieurs des revendications 6 à 26, **caractérisé en ce que** l'autre rayon lumineux (82) est réfléchi dans la longue-vue par l'avant via une lentille d'objectif de la longue-vue.

28. Dispositif selon l'une quelconque ou plusieurs des revendications 6 à 27, **caractérisé en ce que** le dispositif laser (41) et les moyens (80 à 90) possèdent la même distance focale.
